# EUROPEAN PATENT APPLICATION

(11) **EP 4 683 178 A1**
(43) Date of publication of application: **21.01.2026**
(21) Application number: 24189888.1
(22) Date of filing: 19.07.2024
(51) Int. Cl.: H02K 1/32, H02K 3/24, H02K 9/197

(54) **EXTERNALLY EXCITED SYNCHRONOUS MACHINE WITH IMPROVED COOLING SYSTEM**

(71) Applicant: TOYOTA JIDOSHA KABUSHIKI KAISHA, Aichi-ken, 471-8571 (JP)
(72) Inventor: SCHUERMANS, Raf, 1140 BRUSSELS (BE); HENDRICKX, Raf, 1140 BRUSSELS (BE)
(74) Representative: Cabinet Beau de Loménie

(57) **Abstract**

An externally excited synchronous machine (1) for a vehicle, comprising
- a rotor (3),
- a stator (2),
- a cooling system (8),

characterized in that the cooling system (8) comprises
- a plurality of cooling channel assemblies (80), each cooling channel assembly being wound around a tooth (32) of the rotor (3),

wherein each cooling channel assembly (80) comprises:
- at least two longitudinal cooling tubes (82) extending on each radial portions of a tooth winding (40),
- a plurality of proximal cooling tubes (85) extending along the proximal end of the tooth windings, said proximal cooling tubes (85) being connected to the longitudinal cooling tubes (82),
- a plurality of distal cooling tubes (86) extending along the distal end of the tooth windings, said distal cooling tubes (86) being connected to the longitudinal cooling tubes (82).

## Description

### BACKGROUND OF THE INVENTION

### 1. Field of the invention

The present disclosure relates to an electric motor of the externally excited synchronous machine type which comprises an improved cooling system.

### 2. Description of Related Art

The increasing demand in electric vehicles has led to the development of various technologies for electric motors. Externally excited synchronous machines (EESM) provide an interesting alternative to conventional electric motors in that such machines do not require magnets or rare earth materials.

However, such machines cause a number of issues notably sur to the impact of the high-speed rotation on the copper wires that tends to cause durability issue as the wires have to withstand high centrifugal forces.

In addition, a major consideration during the design stage of an EESM is the geometry and configuration of the rotor pole coolant channels. The arrangement of cooling channels in the rotor dissipates the created heat originating from: Iron losses, copper losses and eddy currents.

### SUMMARY

The object of the present invention is to at least substantially remedy the above-mentioned drawbacks.

In this respect, the present disclosure relates to an externally excited synchronous machine for a vehicle, comprising
- a rotor, comprising a plurality of teeth and rotor windings, the rotor extending along a longitudinal axis defining a longitudinal direction, each tooth being at least partially surrounded by rotor windings so as to define a plurality of tooth windings, each comprising two radial portions, a proximal portion and a distal portion along the longitudinal direction,
- a stator, arranged around the rotor, wherein the rotor is adapted to rotate around the longitudinal axis with respect to the stator,
- a cooling system,
   characterized in that the cooling system comprises
- a plurality of cooling channel assemblies, each cooling channel assembly being wound around a tooth of the rotor,
   wherein each cooling channel assembly comprises:
- a plurality of longitudinal cooling tubes, each extending along the longitudinal direction along the tooth windings, each cooling channel assembly comprising at least two longitudinal cooling tubes extending on each radial portions of a tooth winding,
- a plurality of proximal cooling tubes extending along the proximal end of the tooth windings, said proximal cooling tubes being connected to the longitudinal cooling tubes,
- a plurality of distal cooling tubes extending along the distal end of the tooth windings, said distal cooling tubes being connected to the longitudinal cooling tubes.

In an example embodiment, the cooling tubes of the cooling system are made in copper.

In an example embodiment, for each cooling channel assembly, the proximal cooling tubes are fluidly connected at the proximal node point, and the distal cooling tubes are fluidly connected at the distal node point.

In an example embodiment, the cooling tubes of the cooling system arranged around the tooth windings comprise a deformable layer around said cooling tubes.

In an example embodiment, said deformable layer is made of a viscous material.

In an example embodiment, each cooling channel assembly comprises at least three longitudinal cooling tubes extending on each radial portions of a tooth winding.

In an example embodiment, for each tooth,
- the tubes of the plurality of proximal cooling tubes are crossing on a proximal node point,
- the tubes of the plurality of distal cooling tubes are crossing on a distal node point,
   and wherein the cooling system further comprises
- a proximal end plate and a distal end plate, provided at a proximal end and at a distal end of the rotor along the longitudinal direction,
- the proximal end plate and the distal end plate each comprise channels connected to each of the cooling channel assemblies.

In an example embodiment, the proximal end plate comprises a proximal fluid port that extends along the longitudinal axis, and proximal distribution channels that extend radially from said fluid port to each of the proximal node points, and the distal end plate comprises a distal fluid port that extends along the longitudinal axis, and distal distribution channels that extend radially from said fluid port to each of the distal node points.

In an example embodiment, the cooling channel assemblies are in fluidic connection with each other through the proximal end plate and the distal end plate.

In an example embodiment, the proximal end plate and the distal end plate are connected to each other by fastening means that extend between said proximal end plate and distal end plate.

In an example embodiment, said fastening means comprise bolts that extend along the longitudinal direction between the proximal end plate and the distal end plate.

The present invention also relates to a vehicle comprising such an externally excited synchronous machine as a prime mover.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a side view of a machine according to an aspect of the present invention.
- FIG.2 is a schematic view of a tooth of a machine according to an aspect of the present invention.
- FIG.3 is a schematic view of a tooth of a machine according to another aspect of the present invention.
- FIG.4 is a schematic rear view of a machine according to an aspect of the present invention.
- FIG.5 is another schematic view of a machine according to the present invention.
- FIG.6 is another schematic view of a machine according to the present invention.
- FIG.7 is a schematic front view of a machine according to another aspect of the present invention.
- FIG. 8 is a schematic rear view of a machine according to another aspect of the present invention.
- FIG.9 is a schematic representation of a vehicle that includes a machine according to an aspect of the invention.

### DETAILED DESCRIPTION OF EMBODIMENTS

Embodiments of the present invention will be described in reference to the drawings.

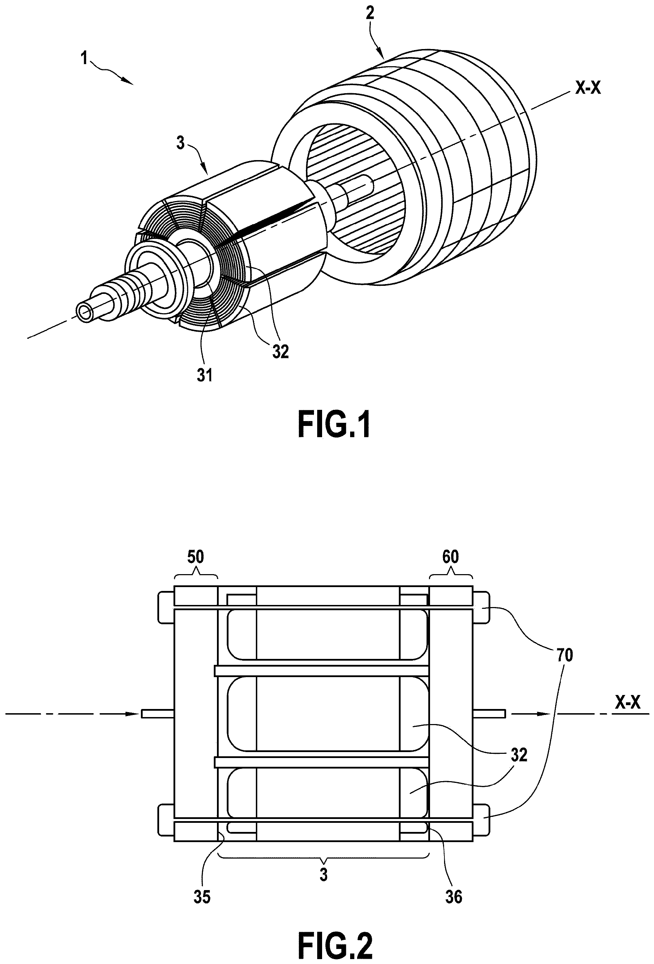

Figure 1 presents a view of an example of a known externally excited synchronous machine (EESM) 1, which comprises a stator 2 and a rotor 3 arranged within the stator 2 so that the stator 2 at least partially surrounds the rotor 3. The rotor 3 is adapted to rotate around a longitudinal axis X-X with respect to the stator 2.

The stator 2 of the EESM has a three-phase winding which defines coils that are adapted to be excited with a sinusoidally time varying current, which produces a rotating magnetic field with constant magnitude.

The rotor 3 comprises teeth 32 that extend radially around a core portion 31. These teeth 32 each comprise copper rotor windings 40 made of copper wires that are wound around each tooth of the rotor.

As per the known structure of an EESM machine, these copper rotor windings 40 are adapted to be supplied external excitation so as to produce a stationary magnetic field, for instance through a supply of DC current delivered by contact brushes or inductive coils. The interaction of the magnetic fields of the rotor 2 and the stator 3 in the air gap between the rotor 2 and the stator 3 result in the electromagnetic torque production.

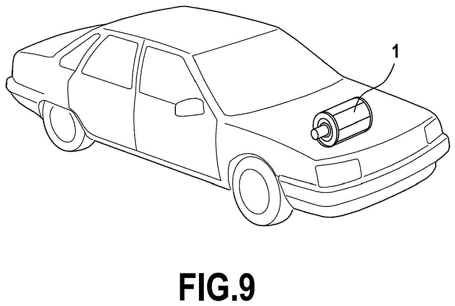

Different embodiments of the invention are now described in reference to figures 2 to 9.

Figure 2 presents a side view of a rotor 3 of a EESM as per the invention. As mentioned previously, the rotor 3 extends along a longitudinal direction X-X. A proximal end 35 and a distal end 36 are arbitrarily defined for the rotor 3 along this longitudinal direction X-X. It is understood that the proximal and distal words are purely for description purposes and should not be interpreted in a limiting way.

The rotor 3 can be provided with end plates; a proximal end plate 50 and a distal end plate 60 arranged respectively to cover the proximal end 35 and the distal end 36 of the rotor 3.

The proximal end plate 50 and the distal end plate 60 can be connected to each other by fastening means 70 that extend between said proximal end plate 50 and distal end plate 60. Such fastening means 70 can for instance be bolts that extend between said proximal end plate 50 and distal end plate 60 across the rotor 3, and that are tightened by nuts. Such an arrangement applies a presentation force on the rotor 3 which improves the structural integrity of the rotor 3.

The rotor 3 of the EESM according to the present invention is provided with a cooling system 8. Various embodiments of this cooling system are described hereafter.

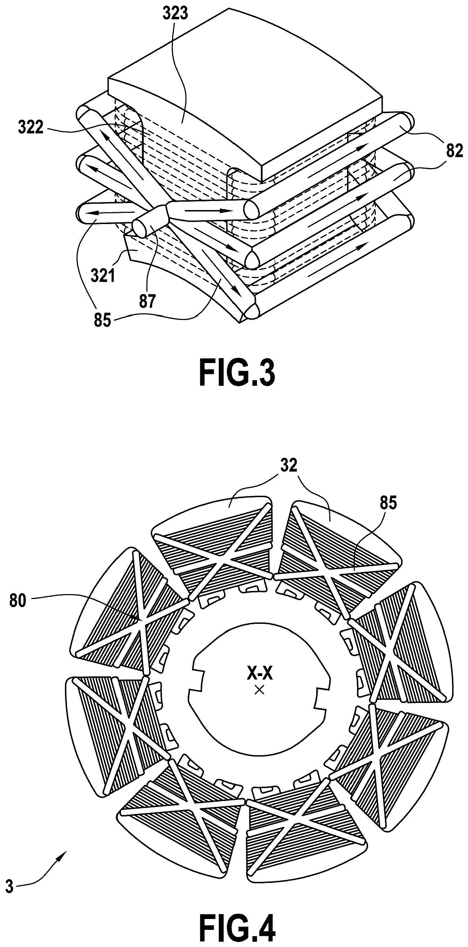

Figure 3 presents a first embodiment of a cooling system for a rotor 3 of the EESM according to the invention.

This figure presents a tooth 32 of the rotor. The copper rotor windings 40 are represented in a schematic way for readability. The tooth 32 typically presents a I-shaped section, defining a base 321, a body 322 and a head 323 arranged successively along a radial direction from the longitudinal axis X-X. The body 322 has a reduced thickness relatively to the base 321 and the head 323, defining a notch to accommodate the copper rotor windings 40.

The copper rotor windings 40 are wound around the tooth 32, typically around the body 322 of the tooth 32, so as to define a tooth winding that comprises two radial portions, a proximal portion and a distal portion.

As mentioned previously, the various copper rotor windings 40 arranged around the teeth 32 of the rotor are typically supplied an external excitation so as to produce a stationary magnetic field.

The cooling system 8 as per the claimed invention comprises a plurality of cooling channel assemblies 80, each cooling channel assembly being wound around a tooth winding of the rotor 3.

Each cooling channel assembly 80 comprises a plurality of longitudinal cooling tubes 82, each extending along the longitudinal direction along the windings. Each cooling channel assembly comprising at least two longitudinal cooling tubes 82 extending on each radial portions of a tooth winding 40.

Each cooling channel assembly comprises a plurality of proximal cooling tubes 85 extending along the proximal end of the tooth windings 40, said proximal cooling tubes 85 being fluidly connected to the longitudinal cooling tubes 82.

Each cooling channel assembly comprises a plurality of distal cooling tubes 86 extending along the distal end of the tooth windings 40, said distal cooling tubes 86 being fluidly connected to the longitudinal cooling tubes 82.

In the embodiment illustrated in figure 3, the cooling channel assembly comprises three longitudinal cooling tubes 82 extending on each radial portion of the tooth winding 40, and six proximal cooling tubes 85 extending on the proximal portion of the tooth winding 40, each of the proximal cooling tubes 85 being fluidly connected to a longitudinal cooling tube 82, and all the proximal cooling tubes 85 are fluidly connected at a proximal nodal point 87.

In the same way, the cooling channel assembly comprises six distal cooling tubes 86 extending on the distal portion of the tooth winding 40, each of the distal cooling tubes being fluidly connected to a longitudinal cooling tube 82, and all the distal cooling tubes are fluidly connected at a distal nodal point.

The longitudinal cooling tubes 82 on each radial side of each tooth 32 are typically arranged symmetrically. In the same way, the proximal cooling tubes 85 and the distal cooling tubes are typically arranged symmetrically. A symmetric configuration improves the balance of the cooling system.

In an example embodiment, the proximal nodal point 87 defines a fluid inlet for the cooling channel assembly, and the distal nodal point defines a fluid outlet for the cooling channel assembly. It is understood that the opposite configuration is also possible, the proximal nodal point 87 can define a fluid outlet for the cooling channel assembly, and the distal nodal point can define a fluid inlet for the cooling channel assembly.

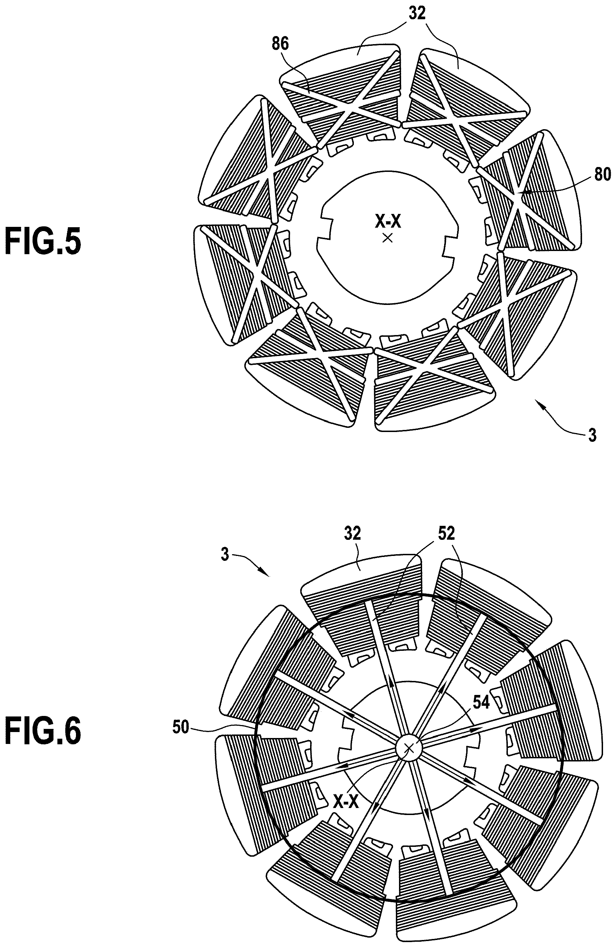

Figures 4 and 5 present a simplified front (or proximal side) and a simplified rear (or distal side) view of the rotor according to an aspect of the invention which includes cooling channel assemblies 80 such as described in with reference to figure 3.

As illustrated, each tooth 32 of the rotor comprises a cooling channel assembly 80. As illustrated, the proximal cooling tubes 85 and distal cooling tubes 86 are typically in symmetric configurations, which improves the rotational balance of the rotor 3.

Figure 6 represents in a schematic way the proximal side of the rotor 3 covered by the proximal end plate 50. This figure illustrates a fluid channel arrangement in the proximal end plate 50 so as to supply fluid to the various cooling channel assemblies 80.

In this embodiment, radial fluid channels 52 extend from an axial nodal point 84, so as to be connected to the fluid inlets 87 of the various cooling channel assemblies, typically at the proximal node points.

The distal side or the rotor 3 and the distal end plate 60 typically present a similar configuration, with channels extending radially to define a fluid outlet.

The cooling channel assemblies 80 from the different teeth 32 are therefore fluidly connected through the proximal end plate 50 and the distal end plate 60. The cooling channel assemblies 80 from the different teeth 32 can therefore be isolated from each other, and only fluidly connected through the proximal end plate 50 and the distal end plate 60.

In an embodiment, the radial fluid channels 52 can be provided with flow control means such a valve, so as to control the cooling fluid supplied to the various cooling channel assemblies 80.

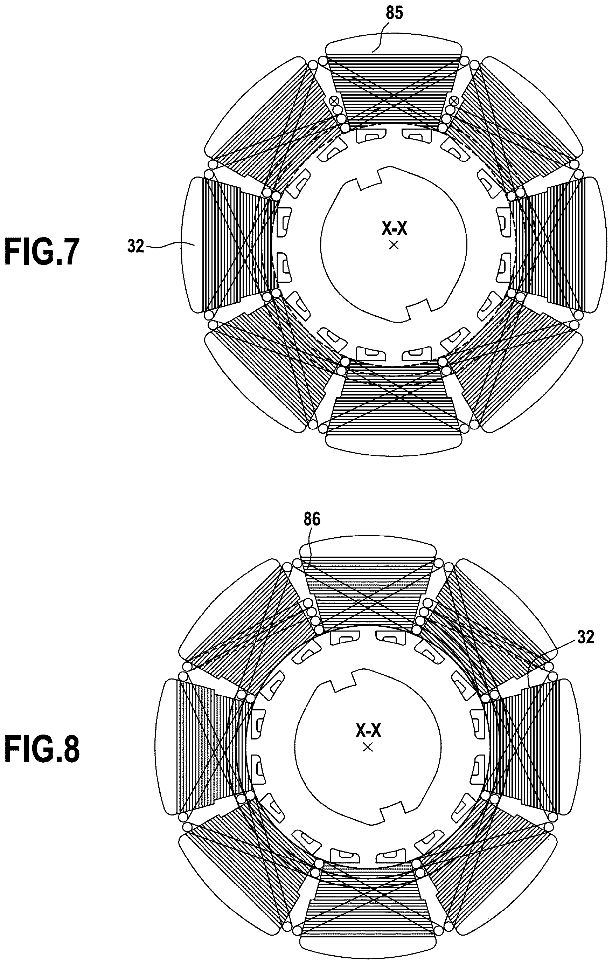

Figures 7 and 8 represent another embodiment according to the present invention. Figure 7 is a view of the proximal end side of the rotor 3, and figure 8 is a view of the distal end side of the rotor 3.

In this embodiment, the cooling channel assemblies 80 are fluidly connected to each other and are made from two copper hollow tubes that are continuously wound around the teeth 32, and therefore around the tooth windings 40.

In the illustrated embodiment, the fluid inlets and outlets are located on the same side of the rotor 3, here on the distal side of the rotor 3.

Each tube is connected to either a fluid inlet on one side or the rotor. We consider here a tube that is connected to an inlet on the distal side or the rotor. This tube then goes along one side of a tooth winding 40, along the base 321 of the tooth 32. It then reaches the proximal side of the tooth 32, and it crosses the proximal side to reach the head 323 of the tooth 32 (i.e. the radial outer portion of the tooth winding 40), on the opposite radial side of the tooth 32. The tube then goes along this side of the tooth winding 40 along the head 323 of the tooth until it comes back to the distal side of the tooth 32. The tube is then bent to reach the adjacent tooth 32, and to be wrapped around this adjacent tooth winding 40 in a similar pattern. The tube is wrapped this way around all the tooth windings 40 (i.e. around all the teeth 32) of the rotor 3 until it reaches its inlet point. It is then connected to a fluid outlet.

A second tube is wrapped around the tooth windings 40 in a symmetrical way, so that each tooth 32 is wrapped around by the two tubes.

In other words, the tooth windings 40 are wrapped around by at least two tubes that define a continuous cooling system around the tooth windings 40.

In such a configuration, the two tubes are crossing each other on the proximal side and distal side of each tooth 32. The tubes can be adapted to have matching shapes so as to ensure a proper fitting when crossing. The tubes can for instance be provided with a coating that include complementary notches adapted to engage each other when crossing.

This embodiment therefore enables to achieve a continuous wrapping of the teeth by the cooling channels that define a continuous cooling system around all the teeth 32 of the rotor 3.

In this embodiment, the fluid inlet and the fluid outlet of both tubes are typically arranged on a same side of the rotor 3, for instance on the proximal side or on the distal side of the rotor 3. According to another example, the fluid inlet and the fluid outlet of the two tubes can be arranged on an opposite side of the rotor 3.

In the various embodiments, the cooling tubes of the cooling system are made in copper of from a copper alloy. This ensures good thermal properties while not generating a parasitic magnetic field.

The cooling system according to the invention enables to achieve a dual function: ensuring the cooling of the rotor windings and maintaining these rotor windings in position during the high-speed rotation of the rotor 3.

In the various embodiments, the cooling tubes of the cooling system can comprise a deformable layer around said cooling tubes. This deformable layer can for instance be made of viscous material, for instance a viscous paste type material with good heat transfer coefficient. Such a deformable layer enables to improve contact surface between the cooling tubes and the tooth windings, thereby improving thermal dissipation. In addition, such a deformable layer enables to reduce vibrations, and therefore improves the maintenance of the tooth windings.

In the various embodiments, potting material can be injected between the teeth 32 of the rotor 3. This sets the tooth windings and the cooling system in place and ensures an improved structural integrity for the rotor 3.

The externally excited synchronous machine as described can for instance be used as a prime mover for a vehicle such as a car or can be associated with another engine in a hybrid vehicle.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. An externally excited synchronous machine (1) for a vehicle, comprising
- a rotor (3), comprising a plurality of teeth (32) and rotor windings (40), the rotor extending along a longitudinal axis (X-X) defining a longitudinal direction, each tooth (32) being at least partially surrounded by rotor windings (40) so as to define a plurality of tooth windings, each comprising two radial portions, a proximal portion and a distal portion along the longitudinal direction,
- a stator (2), arranged around the rotor (3), wherein the rotor (3) is adapted to rotate around the longitudinal axis (X-X) with respect to the stator (2),
- a cooling system (8),
**characterized in that** the cooling system (8) comprises
- a plurality of cooling channel assemblies (80), each cooling channel assembly being wound around a tooth (32) of the rotor (3),
wherein each cooling channel assembly (80) comprises:
- a plurality of longitudinal cooling tubes (82), each extending along the longitudinal direction along the tooth windings (40), each cooling channel assembly (80) comprising at least two longitudinal cooling tubes (82) extending on each radial portions of a tooth winding (40),
- a plurality of proximal cooling tubes (85) extending along the proximal end of the tooth windings, said proximal cooling tubes (85) being connected to the longitudinal cooling tubes (82),
- a plurality of distal cooling tubes (86) extending along the distal end of the tooth windings, said distal cooling tubes (86) being connected to the longitudinal cooling tubes (82).

2. The externally excited synchronous machine (1) of claim 1, wherein the cooling tubes of the cooling system (8) are made in copper.

3. The externally excited synchronous machine (1) of claim 1 or claim 2, wherein for each cooling channel assembly (80), the proximal cooling tubes (85) are fluidly connected at the proximal node point (87), and the distal cooling tubes (86) are fluidly connected at the distal node point.

4. The externally excited synchronous machine (1) of any one of claims 1 to 3, wherein the cooling tubes of the cooling system (8) arranged around the tooth windings (40) comprise a deformable layer around said cooling tubes.

5. The externally excited synchronous machine (1) of claim 4, wherein said deformable layer is made of a viscous material.

6. The externally excited synchronous machine (1) of any one of claims 1 to 5, wherein
each cooling channel assembly (80) comprises at least three longitudinal cooling tubes (82) extending on each radial portions of a tooth winding (40).

7. The externally excited synchronous machine (1) of any one of claims 1 to 6, wherein for each tooth (32),
- the tubes of the plurality of proximal cooling tubes (85) are crossing on a proximal node point (87),
- the tubes of the plurality of distal cooling tubes (86) are crossing on a distal node point, and wherein the cooling system further comprises
- a proximal end plate (50) and a distal end plate (60), provided at a proximal end and at a distal end of the rotor along the longitudinal direction (X-X),
- the proximal end plate (50) and the distal end plate (60) each comprise channels connected to each of the cooling channel assemblies (80).

8. The externally excited synchronous machine (1) of claim 7, wherein the proximal end plate (50) comprises a proximal fluid port (54) that extends along the longitudinal axis, and proximal distribution channels (52) that extend radially from said fluid port (54) to each of the proximal node points (87), and
the distal end plate (60) comprises a distal fluid port that extends along the longitudinal axis, and distal distribution channels that extend radially from said fluid port to each of the distal node points.

9. The externally excited synchronous machine (1) of claim 8, wherein the cooling channel assemblies (80) are in fluidic connection with each other through the proximal end plate (50) and the distal end plate (60).

10. The externally excited synchronous machine (1) of any one of claims 7 to 9, wherein the proximal end plate (50) and the distal end plate (60) are connected to each other by fastening means (70) that extend between said proximal end plate (50) and distal end plate (60).

11. The externally excited synchronous machine (1) of claim 10, wherein said fastening means comprise bolts that extend along the longitudinal direction between the proximal end plate (50) and the distal end plate (60).

12. A vehicle comprising the externally excited synchronous machine (1) of any one of the preceding claims as a prime mover.

## Amended claims

### Amended claims in accordance with Rule 137(2) EPC.

1. An externally excited synchronous machine (1) for a vehicle, comprising
- a rotor (3), comprising a plurality of teeth (32) and rotor windings (40), the rotor extending along a longitudinal axis (X-X) defining a longitudinal direction, each tooth (32) being at least partially surrounded by rotor windings (40) so as to define a plurality of tooth windings, each comprising two radial portions, a proximal portion and a distal portion along the longitudinal direction,
- a stator (2), arranged around the rotor (3), wherein the rotor (3) is adapted to rotate around the longitudinal axis (X-X) with respect to the stator (2),
- a cooling system (8),
**characterized in that** the cooling system (8) comprises
- a plurality of cooling channel assemblies (80), each cooling channel assembly being wound around a tooth (32) of the rotor (3),
wherein each cooling channel assembly (80) comprises:
- a plurality of longitudinal cooling tubes (82), each extending along the longitudinal direction along the tooth windings (40), each cooling channel assembly (80) comprising at least two longitudinal cooling tubes (82) extending on each radial portions of a tooth winding (40),
- a plurality of proximal cooling tubes (85) extending along the proximal end of the tooth windings, said proximal cooling tubes (85) being connected to the longitudinal cooling tubes (82),
- a plurality of distal cooling tubes (86) extending along the distal end of the tooth windings, said distal cooling tubes (86) being connected to the longitudinal cooling tubes (82),
and wherein for each tooth (32),
- the tubes of the plurality of proximal cooling tubes (85) are crossing on a proximal node point (87),
- the tubes of the plurality of distal cooling tubes (86) are crossing on a distal node point, and wherein the cooling system further comprises
- a proximal end plate (50) and a distal end plate (60), provided at a proximal end and at a distal end of the rotor along the longitudinal direction (X-X),
- the proximal end plate (50) and the distal end plate (60) each comprise channels connected to each of the cooling channel assemblies (80).

2. The externally excited synchronous machine (1) of claim 1, wherein the cooling tubes of the cooling system (8) are made in copper.

3. The externally excited synchronous machine (1) of claim 1 or claim 2, wherein for each cooling channel assembly (80), the proximal cooling tubes (85) are fluidly connected at the proximal node point (87), and the distal cooling tubes (86) are fluidly connected at the distal node point.

4. The externally excited synchronous machine (1) of any one of claims 1 to 3, wherein the cooling tubes of the cooling system (8) arranged around the tooth windings (40) comprise a deformable layer around said cooling tubes.

5. The externally excited synchronous machine (1) of claim 4, wherein said deformable layer is made of a viscous material.

6. The externally excited synchronous machine (1) of any one of claims 1 to 5, wherein
each cooling channel assembly (80) comprises at least three longitudinal cooling tubes (82) extending on each radial portions of a tooth winding (40).

7. The externally excited synchronous machine (1) of any one of claims 1 to 6, wherein the proximal end plate (50) comprises a proximal fluid port (54) that extends along the longitudinal axis, and proximal distribution channels (52) that extend radially from said fluid port (54) to each of the proximal node points (87), and
the distal end plate (60) comprises a distal fluid port that extends along the longitudinal axis, and distal distribution channels that extend radially from said fluid port to each of the distal node points.

8. The externally excited synchronous machine (1) of claim 7, wherein the cooling channel assemblies (80) are in fluidic connection with each other through the proximal end plate (50) and the distal end plate (60).

9. The externally excited synchronous machine (1) of any one of claims 1 to 8, wherein the proximal end plate (50) and the distal end plate (60) are connected to each other by fastening means (70) that extend between said proximal end plate (50) and distal end plate (60).

10. The externally excited synchronous machine (1) of claim 9, wherein said fastening means comprise bolts that extend along the longitudinal direction between the proximal end plate (50) and the distal end plate (60).

11. A vehicle comprising the externally excited synchronous machine (1) of any one of the preceding claims as a prime mover.
